## Europäisches Patentamt
## European Patent Office
## Office européen des brevets

(11) Veröffentlichungsnummer: **0 163 162**
**B1**

(12) **EUROPÄISCHE PATENTSCHRIFT**

(45) Veröffentlichungstag der Patentschrift:
**10.08.88**

(21) Anmeldenummer: **85105393.4**

(22) Anmeldetag: **03.05.85**

(51) Int. Cl.⁴: **F 16 F 13/00,** B 60 K 5/12

(54) Zweikammer-Motorlager mit hydraulischer Dämpfung.

(30) Priorität: **24.05.84 DE 3419437**

(43) Veröffentlichungstag der Anmeldung:
**04.12.85 Patentblatt 85/49**

(45) Bekanntmachung des Hinweises auf die Patenterteilung:
**10.08.88 Patentblatt 88/32**

(84) Benannte Vertragsstaaten:
**DE FR GB IT SE**

(56) Entgegenhaltungen:
**EP-A-0 061 065**
**EP-A-0 110 197**
**DE-A-3 009 747**
**DE-A-3 024 917**
**DE-A-3 423 698**
**FR-A-2 496 810**

**PATENTS ABSTRACTS OF JAPAN, Band 8, Nr. 83**
**(M-290) 1520 , 17. April 1984; & JP - A - 59 1829**
**(TOYODA GOSEI K.K.) 07.01.1984**
**PATENTS ABSTRACTS OF JAPAN, Band 8, Nr. 220**
**(M-330) 1657 , 6. Oktober 1984; & JP - A - 59 103 043**
**(NISSAN JIDOSHA K.K.) 14.06.1984**
**Idem**
**PATENTS ABSTRACTS OF JAPAN, Band 7, Nr. 120**
**(M-217) 1265 , 25. Mai 1983**

(73) Patentinhaber: **METZELER Gesellschaft mit
beschränkter Haftung, Gneisenaustrasse 15,
D-8000 München 50 (DE)**

(72) Erfinder: **Andrä, Rainer, Dr., Dehrnerstrasse 10,
D-6250 Limburg 5 (DE)**

(74) Vertreter: **Michelis, Theodor, Dipl.- Ing.,
Gneisenaustrasse 15, D-8000 München 50 (DE)**

LIBER, STOCKHOLM 1988

**Beschreibung**

Die Erfindung bezieht sich auf ein Zweikammer-Motorlager mit hydraulischer Dämpfung, insbesondere für Kraftfahrzeuge, dessen flüssigkeitsgefüllte und gummielastische Umfangswände aufweisende Kammern über eine Leitung in einer Zwischenplatte miteinander in Verbindung stehen und bei dem angrenzend an die motorseitige Lagerkammer eine Membran mit einer Tilgermase angeordnet ist, die in Abhängigkeit vorgegebener Betriebsparameter elektrodynamisch in Schwingungen versetzbar ist.

Grundsätzlich sind hydraulisch gedämpfte Motorlager beispielsweise aus der DE-A-30 27 742 bekannt. Sie sprechen im allgemeinen bei hochfrequenten Schwingungen kleiner Amplitude hydraulisch nicht an, so daß diese Schwingungen nur geringfügig gedämpft werden, während bei Schwingungen niedriger werdender Frequenz und größer werdender Amplitude eine zunehmende Dämpfung durch zunehmenden Flüssigkeitsaustausch über die die Zwischenplatte durchsetzende Leitung erfolgt. Durch die elastische Lagerung der Zwischenplatte ergibt sich in mehr oder weniger großem Umfang auch eine hydraulische Entkopplung kleiner Amplituden in einem Frequenzbereich bis etwa 300 Hz, wodurch das akustische Verhalten verbessert wird. Bei einer Amplitudenentkopplung steigt die dynamische Steifigkeit des Lagers bei kleinen Amplituden nicht wesentlich über diejenige der Tragfeder, d.h. der die motorseitige Kammer umgebenden Umfangswand. Mit einer Frequenzkopplung kann in bestimmten, relativ engen Frequenzbereichen eine Absenkung der dynamischen Steifigkeit unter die statische Steifigkeit der Tragfeder erreicht werden. Die Arbeitsweise solcher Lager ist durch Geometrie, Masse und Steifigkeit der im Lager eingesetzten, schwingungsfähigen Systeme festgelegt. Unbefriedigend ist die relativ schmalbandige Wirkungsweise dieser Lösung.

Der maximale Wirkungsgrad wird dabei dann erreicht, wenn die schwingungsfähigen Teile, d.h. die elastisch gelagerte Zwischenplatte, in Gegenphase zur Erregung, d.h. zur Flüssigkeitsmasse, in den Lagermassen schwingen, wodurch dann eine vollständige hydraulische Entkopplung bewirkt wird. Das Erreichen derartiger Schwingungen in Gegenphase ist jedoch weitgehend allein von geometrischen Daten sowie der Masse der schwingungsfähigen Teile abhängig und kann daher nur immer für ein relativ schmales Frequenzband optimal ausgelegt werden. Das bedeutet, daß derartige Systeme jeweils nur für einen speziellen Belastungsfall ausgelegt werden können und daß damit derartige hydraulisch gedämpfte Lager passive Dämpfungselemente darstellen, die bei einer bestimmten Belastung vorgegeben reagieren, ohne daß am Lager selbst eine Regel- oder Steuermöglichkeit gegeben ist.

Aus der JP-A-59-18 29 ist es dazu bekannt, in einem derartigen hydraulisch gedämpften Lager durch ein gesondertes Schwingungselement pulsierende Druckschwankungen zu erzeugen, deren Phase den in das Motorlager eingeleiteten Schwingungen entgegengesetzt ist. Dazu ist der zentrale Bereich der oberen starren Begrenzungswandung der Lagerkammer durch einen von außen angesetzten Balg ersetzt, der stirnseitig durch eine Platte abgeschlossen ist, der elektrodynamisch von einer Spule und entsprechenden Magneten in Abhängigkeit von den Signalen eines Sensors in Schwingungen versetzt werden kann. Neben dem relativ komplizierten Aufbau dieser Schwingungsanordnung besteht auch bei einer Leckage des ständig bewegten dünnen Balges die Gefahr, daß die hydraulische Lagerflüssigkeit nach außen austritt und damit das Lager funktionsuntüchtig wird.

Der vorliegenden Erfindung liegt daher die Aufgabe zugrunde, eine derartige elektrodynamische Schwingungsanordnung zu schaffen, die einfach und kompakt aufgebaut ist und bei der die Gefahr eines Flüssigkeitsaustritts sicher vermieden wird.

Zur Lösung dieser Aufgabe ist erfindungsgemäß vorgesehen, daß die Membran mit der Tilgermasse eine gesonderte Membrankammer zur motorseitigen Lagerkammer hin abschließt und daß innerhalb der Membrankammer konzentrisch und im Abstand zueinander ein ringförmiger Dauermagnet und eine elektrische Spule angeordnet sind, von denen der Dauermagnet oder die Spule mit der Tilgermasse fest verbunden sind.

Mit der erfindungsgemäßen Lösung ist also die Membrankammer mit der Membran und der elektrodynamisch angetriebenen Tilgermasse direkt innerhalb der motorseitigen Lagerkammer angeordnet. Dabei sind darüber hinaus nur geringe Massen sowohl des schwingungsfähigen Systems als auch der angrenzenen Flüssigkeit zu bewegen. Durch die konzentrische Anordnung von Erregerspule und die mit der Membran gekoppelten Tilgermasse bzw. dem Dauermagneten ist somit eine phasenverschobene und in der Amplitude besser einregulierbare Schwingung ermöglicht.

Dabei kann der Dauermagnet konzentrisch zur Innenwandung der Membrankammer festgelegt sein und die Spule die topfförmig ausgebildete und mit der Gummimembran verbundene Tilgermasse umschließen.

Es ist dabei möglich, daß die Membrankammer zentral in die die motorseitige Lagerkammer abschließende Motorlagerplatte eingelassen ist und die Membran die Membrankammer zur motorseitigen Lagerkammer hin abschließt. Es kann aber auch die Membrankammer zentral in die Zwischenplatte eingelassen sein, und die Membran diese Membrankammer zur motorseitigen Lagerkammer hin abschließen.

Der für die Schwingungsfrequenz verantwortliche Spulenstrom kann in Abhängigkeit von der Motorbeschleunigung oder in Abhängigkeit vom Druck innerhalb des Lagers oder anderen vorgegebenen Parametern gesteuert werden.

Anhand einer schematischen Zeichnung sind Aufbau und Wirkungsweise von Ausführungsbeispielen nach der Erfindung näher erläutert. Dabei zeigen

Fig. 1     einen Längsschnitt durch ein Zweikammer-Motorlager mit prinzipieller Anordnung des Schwingungserregers,

Fig. 2     einen Längsschnitt durch ein Motorlager mit in die stirnseitige Membrankammer integriertem Schwingungserreger und

Fig. 3     einen Längsschnitt durch ein Motorlager mit in die Zwischenplatte integriertem Schwingungserreger.

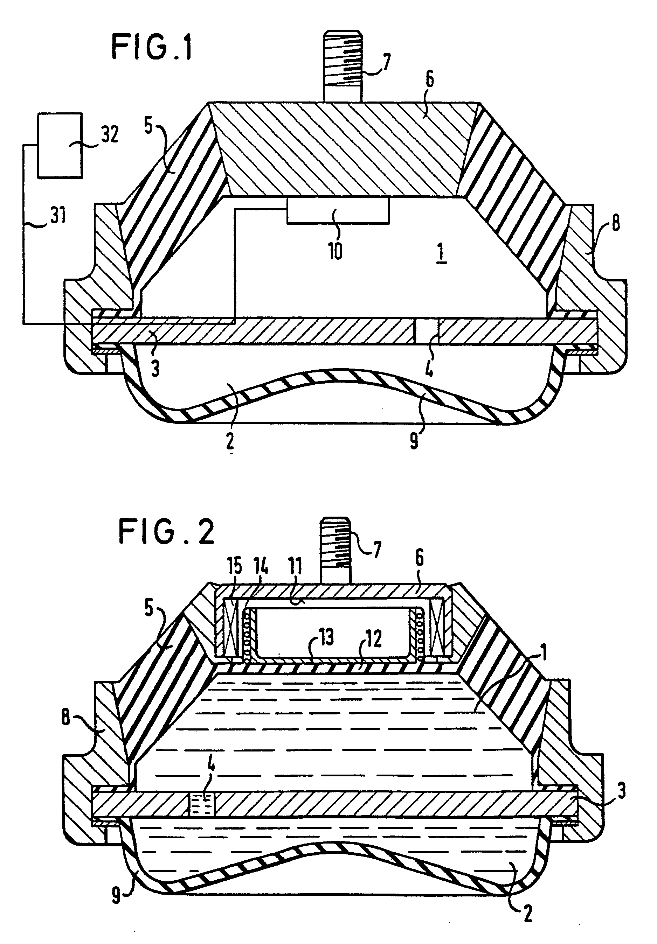

Wie aus Fig. 1 ersichtlich ist, die den schematischen Aufbau eines derartigen hydraulisch gedämpften Zweikammer-Motorlagers darstellt, besteht dieses Lager im wesentlichen aus einer oberen motorseitigen Kammer 1 und einer unteren Kammer 2, die mit einer hydraulischen Flüssigkeit gefüllt und durch eine Zwischenplatte 3 mit einer Drosselöffnung 4 voneinander getrennt sind. Die obere Kammer 1 wird dabei von einer starkwandigen hohlkegelförmigen Kammerwandung 5 - der sogenannten Tragfeder - aus gummielastischem Material umschlossen, die an der oberen Stirnseite von der Motorlagerplatte 6 mit einem aufgesetzten Gewindebolzen 7 abgeschlossen und am unteren Außenumfang mit dem ringförmigen Widerlager 8 haftend verbunden ist. Die untere Kammer 2 wird von einer beispielsweise tassenförmigen Kammerwandung 9 aus ebenfalls gummielastischem Material gebildet, die ebenfalls am Widerlager 8 abdichtend befestigt ist. Auch die Zwischenplatte 3 ist im Widerlager 8 gelagert.

Erfindungsgemäß ist nunmehr in die motorseitige Kammer 1 ein aktiver Schwingungserreger 10 eingebaut, der über eine beliebig geführte Steuerleitung 31 mit einem Steuergerät 32 außerhalb des Lagers selbst in Wirkverbindung steht. Mit diesem Schwingungserreger 10, der pneumatisch, hydraulisch oder elektrodynamisch arbeiten kann, können jetzt gezielt Schwingungen in Gegenphase zu den dem Lager bzw. der Flüssigkeit innerhalb der Kammern 1 und 2 aufgezwungenen Schwingung erzeugt werden, wodurch eine vollständige hydraulische Entkopplung sowie eine wesentliche Herabsetzung der dynamischen Steifigkeit bewirkt wird. Da Frequenz und auch Amplitude des Schwingungserregers 10 praktisch auf jeden beliebigen Wert eingestellt werden kann, ist damit eine frequenz und amplitudenunabhängige Steuerung des Lagerverhaltens möglich, wodurch insbesondere die dynamische Steifigkeit über den gesamten Frequenzbereich des Lager zumindest bis auf die statische Steifigkeit der Tragfeder 5 abgesenkt werden.

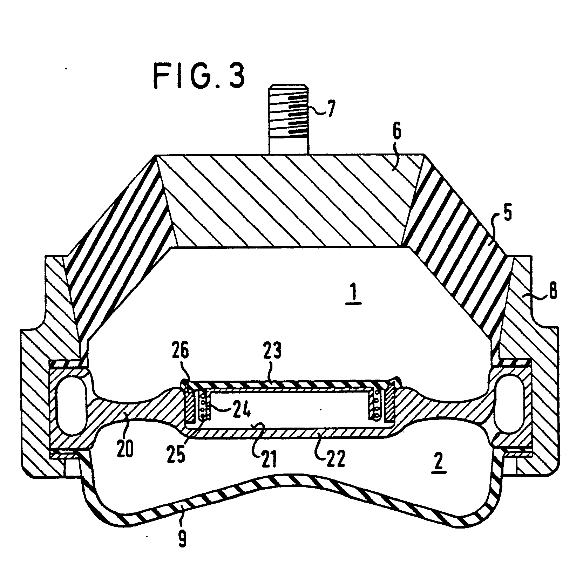

Konstruktive Ausgestaltungen für die Anordnung des Schwingungserregers sind in Fig. 2 und 3 näher erläutert. Nach Fig. 2 weist das Motorlager im an die obere Kammer 1 angrenzenden Bereich auf der Unterseite der Motorlagerplatte 6 eine zylindrische Ausnehmung 11 als Membrankammer auf, die zur Kammer 1 hin durch eine elastische Gummimembran 12 mit einer zentralen Tilgermasse 13 abgeschlossen ist. Diese Tilgermasse 13 ist nach dem dargestellten Ausführungsbeispiel topfförmig ausgebildet und auf ihren Außenumfang von einer Spule 14 umgeben, die in nicht dargestellter Weise an eine außenliegende Stromquelle angeschlossen ist. Gegenüber dieser Spule 14 und konzentrisch dazu ist an der zylindrischen Innenwandung der Membrankammer 11 ein ringförmiger Dauermagnet 15 befestigt. Die Membrankammer 11 selbst kann nach außen offen oder auch abgeschlossen und mit einem vorgegebenen Gasdruck beaufschlagt sein.

Üblicherweise wird jetzt bei Einleiten einer Bewegung oder Schwingung vom Motor auf die Motorlagerplatte 6 von der Masse der in der Kammer 1 enthaltenen Flüssigkeit eine dynamische Kraft erzeugt, die abhängig von der Motorbewegung und der Motorbeschleunigung ist. Diese dynamische Kraft beaufschlagt als hydraulischer Druck die elastische Membran 12 mit der Tilgermasse 13, die somit einer Auslenkung nach oben erfährt, wenn sie belastet wird, und einer Auslenkung nach unten, wenn sie entsprechend entlastet wird und damit als gesonderte Masse schwingt.

Wenn nun die elastisch gelagerte Tilgermasse 13 in Gegenphase zur Erregung, d. h. zur Flüssigkeitsmasse in den Kammern 1 und 2 schwingt, dann wird eine vollständige hydraulische Entkopplung bewirkt. Da Frenquenz und Amplitude der Schwingung der Tilgermasse 13 jedoch wesentlich durch die Größe der Masse, Druck und Volumen der Membrankammer 11 sowie die Federkonstante der Gummimembran 12 bestimmt ist, wird eine derartige gegenphassige Schwingung nur in einem schmalen Frenquenzband auftreten. Wenn jetzt aber bei einer Ausgestaltung der Membran als aktiver Schwingungserreger die Spule 14 mit einem Wechselstrom einstellbarer Frequenz beaufschlagt wird, so können damit Schwingungen der Membran 12 vorgegebener Frequenz und Amplitude erzwungen werden, die jeweils in Gegenphase zu den Schwingungen der Flüssigkeitsmasse in der Kammer 1 liegen, so daß damit praktisch für alle auftretenden Frequenzen eine vollständige hydraulische Entkopplung möglich ist, und damit ein akustisch günstiges Übertragungsverhalten eingestellt werden kann.

Eine weitere Möglichkeit der konstruktiven Ausgestaltung ist in Fig. 3 gezeigt, wonach der Schwingungserreger in die Zwischenplatte 4

integriert ist. Dazu weist die Zwischenplatte 20 im zentralen verdickten Bereich eine als Membrankammer 21 wirkende zylindrische Ausnehmung auf, die auf der Unterseite von der festen Wand 22 und auf der Oberseite von der Membran 23 begrenzt ist. Auf der Innenseite der Membran 23 ist die ebenfalls topfförmig ausgebildete Tilgermasse 24 angeordnet, die entsprechend dem Ausführungsbeispiel nach Fig. 2 auf ihrer Außenseite die Spule 25 trägt. Gegenüber der Spule ist feststehend der ringförmige Dauermagnet 26 angeordent, der bei dem dargestellten Ausführungsbeispiel praktisch als Federring die äußere Verspannung der Membran 23 in der Membrankammer 21 bewirkt.

Dieses schwingungsfähige Gebilde wirkt einmal in beschriebener Weise als zusätzliche Tilgermasse entsprechend dem Ausführungsbeispiel nach Fig. 2 mit der in der oberen Motorlagerplatte 6 angeordneten Tilgermasse und kann dann durch die stromdurchschlossene Spule 25 zu einem aktiven Schwingungssystem angeregt werden.

Eine Ansteuerung des Schwingungserregers ist dabei möglich in Abhängigkeit z. B. von der Motorbeschleunigung oder einer entsprechenden Druckmessung innerhalb des Lagers oder der vom Lager übertragenen Kraft. Die Erfindung ist dabei jedoch nicht beschränkt auf die dargestellten Ausführungsbeispiele, sondern umfaßt auch andere konstruktive Gestaltungen, soweit die vom erfindungsgemäßen Prinzip Gebrauch machen. Insbesondere können dabei auch Lage von Spule und Dauermagnet vertauscht oder eine andere Gestaltung oder Anordnung der Membrankammer gewählt werden.

Insgesamt ergibt sich somit ein aktives Motorlager, bei dem sowohl die Frequenz als auch die Phasenlager und die Amplitude gesteuert werden kann, um damit die dynamische Steifigkeit im gesamten Frequenzbereich abzusenken und das akustische Verhalten des Lagers zu optimieren.

## Patentansprüche

1. Zweikammer-Motorlager mit hydraulischer Dämpfung, insbesondere für Kraftfahrzeuge, dessen flüssigkeitsgefüllte und gummielastische Umfangswände aufweisende Kammern (1, 2) über eine Leitung (4) in einer Zwischenplatte (3) miteinander in Verbindung stehen und bei dem angrenzend an die motorseitige Lagerkammer (1) eine Membran (12; 23) mit einer Tilgermasse (13; 24) angeordnet ist, die in Abhängigkeit vorgegebener Betriebsparameter elektrodynamisch in Schwingungen versetzbar ist, dadurch gekennzeichnet, daß die Membran (12; 23) mit der Tilgermasse (13; 24) eine gesonderte Membrankammer (11; 21) zur motorseitigen Lagerkammer (1) hin abschließt und daß innerhalb der Membrankammer (11; 21) konzentrisch und im Abstand zueinander ein ringförmiger Dauermagnet (15; 26) und eine elektrische Spule (14; 25) angeordnet sind, von denen der Dauermagnet (15; 26) oder die Spule (14, 25) mit der Tilgermasse (13; 24) fest verbunden sind.

2. Zweikammer-Motorlager nach Anspruch 1, dadurch gekennzeichnet, daß der Dauermagnet (15; 26) konzentrisch zur Innenwandung der Membrankammer (11; 21) festgelegt ist und die Spule (14; 25) die topfförmig ausgebildete und mit der Gummimembran (12; 23) verbundene Tilgermasse (13; 24) umschließt.

3. Zweikammer-Motorlager nach Anspruch 2, dadurch gekennzeichnet, daß die Membrankammer (11) in die die motorseitige Lagerkammer (1) abschließende Motorlagerplatte (6) eingelassen ist und die Membran (12) die Membrankammer (11) zur motorseitigen Lagerkammer (1) hin abschließt.

4. Zweikammer-Motorlager nach Anspruch 2, dadurch gekennzeichnet, daß die Membrankammer (2) zentral in die Zwischenplatte (20) eingelassen ist und die Membran (23) die Membrankammer (21) zur motorseitigen Lagerkammer (1) hin abschließt.

5. Zweikammer-Motorlager nach einem der Ansprüche 1 bis 4, dadurch gekennzeichnet, daß der Spulenstrom in Abhängigkeit der Motorbeschleunigung steuerbar ist.

6. Zweikammer-Motorlager nach einem der Ansprüche 1 bis 4, dadurch gekennzeichnet, daß der Spulenstrom in Abhängigkeit vom Druck innerhalb des Lagers steuerbar ist.

## Claims

1. Twin-chamber motor bearing with hydraulic damping, in particular for motor vehicles, whose chambers (1,2) comprising fluid-filled and rubber elastic surrounding walls are in connection with each other through a passage (4) in a separating plate (3), and in which, bordering on the motor-side bearing chamber (1), a membrane (12; 23) with an absorbing mass (13; 24) is arranged, which may be made to oscillate electrodynamically in dependence on predetermined working parameters, characterised in that the membrane (12; 23) with the absorbing mass (13; 24) seals off a separate membrane chamber (11; 21) from the motor-side bearing chamber (1) and that within the membrane chamber (11; 21) a ring-shaped permanent magnet (15; 26) and an electrical coil (14; 25) are arranged concentrically and at a distance to each other, of which the permanent magnet (15; 26) or the coil (14; 25) are firmly connected to the absorbing mass (13; 24)

2. Twin-chamber motor bearing according to claim 1, characterised in that the permanent magnet (15; 26) is fixed concentrically with the interior side of the membrane chamber (11; 21) and the coil (14; 25) surrounds the pot-shaped absorbing mass connected with the rubber membrane (12; 23).

3. Twin chamber motor bearing according to claim 2, characterised in that the membrane chamber (11) is let into the motor bearing plate (6) sealing off the motor-side bearing chamber (1) and the membrane (12) seals off the membrane chamber (11) *in the direction* of the motor-side bearing chamber (1).

4. Twin chamber motor bearing according to claim 2, characterised in that the membrane chamber (2) is centrally let into the separating plate (20) and the membrane (23) seals off the membrane chamber (21) in the direction of the motor-side bearing chamber (1).

5. Twin-chamber motor bearing according to claims 1 to 4, characterised in that the coil current may be controlled in dependence on the acceleration of the motor.

6. Twin-chamber motor bearing according to one of claims 1 to 4, characterised in that the coil current may be controlled in dependence on the pressure inside the bearing.

**Revendications**

1. Support de moteur à deux chambres comportant un amortissement hydraulique, notamment pour véhicules automobiles, et dont les chambres (1,2), qui sont remplies par un liquide et possèdent des parois périphériques présentant l'élasticité du caoutchouc, sont reliées entre elles par l'intermédiaire d'une canalisation (4 ) traversant une plaque intercalaire (3), et dans lequel se trouve disposée, dans une position contiguë à la chambre (1) du support, située du côté du moteur, une membrane (12; 23) comportant une masse d'amortissement (13; 24) qui peut être mise en oscillations, par voie électrodynamique, en fonction de paramètres prédéterminés de fonctionnement, caractérisé par le fait que la membrane (12; 23) munie de la masse d'amortissement (13; 24) ferme une chambre séparée (11; 21) recevant la membrane, en direction de la chambre (1) du support, située du côté du moteur, et qu'à l'intérieur de la chambre (11; 21) recevant la membrane se trouvent disposés, concentriquement et à distance l'une de l'autre, un aimant permanent annulaire (15; 26) et une bobine électrique (14; 25), l'aimant permanent (15; 26) ou la bobine (14; 25) étant relié fermement à la masse d'amortissement (13; 24).

2. Support de moteur à deux chambres suivant la revendication 1, caractérisé par le fait que l'aimant permanent (15; 26) est fixé concentriquement à la paroi intérieure de la chambre (11; 21) logeant la membrane, et que la bobine (14; 25) entoure la masse d'amortissement (13; 24) réalisée avec une forme de pot et reliée à la membrane en caoutchouc (12; 23).

3. Support de moteur à deux chambres suivant la revendication 2, caractérisé par le fait que la chambre (11) recevant la membrane est ménagée dans la plaque (6) du support de moteur, qui ferme la chambre (1) du support située du côté du moteur, et que la membrane (12) ferme la chambre (11) recevant cette membrane, en direction de la chambre (1) du support située du côté du moteur.

4. Support de moteur à deux chambres suivant la revendication 2, caractérisé par le fait que la chambre (2) recevant la membrane est ménagée de façon centrale dans la plaque intercalaire (20) et que la membrane (23) ferme la chambre (21) recevant cette membrane, en direction de la chambre (1) du support, située du côté du moteur.

5. Support de moteur à deux chambres suivant l'une des revendications 1 à 4, caractérisé par le fait que le courant de la bobine peut être commandé en fonction de l'accélération du moteur.

6. Support de moteur à deux chambres suivant l'une des revendications 1 à 4, caractérisé par le fait que le courant de la bobine peut être commandé en fonction de la pression à l'intérieur du support.

## FIG.1

## FIG.2

# FIG.3